# EUROPÄISCHE PATENTSCHRIFT

(11) **EP 1 747 374 B1**
(45) Veröffentlichungstag und Bekanntmachung des Hinweises auf die Patenterteilung: **04.11.2015**
(21) Anmeldenummer: 05730283.8
(22) Anmeldetag: 13.04.2005
(51) Int. Cl.: F03B 17/06

(54) **VORRICHTUNG ZUR NUTZBARMACHUNG DER KINETISCHEN ENERGIE STRÖMENDEN WASSERS**
DEVICE FOR UTILIZING THE KINETIC ENERGY OF FLOWING WATER
DISPOSITIF POUR EXPLOITER L'ENERGIE CINETIQUE DE COURANTS D'EAU

(30) Priorität: 08.05.2004 DE 102004022844
(43) Veröffentlichungstag der Anmeldung: 31.01.2007
(73) Patentinhaber: Janssen, Kai-Ude, 38440 Wolfsburg (DE)
(72) Erfinder: Janssen, Kai-Ude, 38440 Wolfsburg (DE)
(74) Vertreter: Stornebel, Kai
(86) Internationale Anmeldenummer: PCT/EP2005/003868
(87) Internationale Veröffentlichungsnummer: WO 2005/108780

(56) Entgegenhaltungen:
- DE-A1- 10 061 450
- FR-A- 2 405 378
- FR-A- 2 821 647
- GB-A- 2 190 144
- US-A- 3 912 937
- US-A- 4 818 888
- US-A- 6 006 518
- US-A- 6 109 863

## Beschreibung

Die Erfindung betrifft eine Vorrichtung zur Nutzbarmachung der kinetischen Energie strömenden Waser mit mehreren, um eine gemeinsame Rotorachse kreisenden Druckflächen, die um parallel und mit Abstand zur Rotorachse angeordneten Achsen schwenkbar sind, insbesondere zur Energiegewinnung aus Gezeitenströmungen des Meeres, wobei die Druckflächen pendelartig an den Schwenkachsen befestigt und in den Radialebenen zwischen den Schwenkachsen und der Rotorachse Anschlagelemente für die Druckflächen angeordnet sind. Eine Vorrichtung der eingangs genannten Gattung ist bereits in der DE 100 61 450 gezeigt. Die dort vorhandenen Druckflächen sind über ihre Schwenkachsen an sich von der Rotorachse radial erstreckenden Tragarmen befestigt.

Gezeitenkraftwerke sind Wasserkraftwerke zur Nutzung der durch Ebbe und Flut zur Verfügung stehenden potentiellen und kinetischen Energie des Wassers zur Stromerzeugung. Sie werden im Allgemeinen an Flussmündungen oder Meeresbuchten errichtet. Eine geeignete Bucht wird zum Beispiel durch einen Damm mit Wehr und Maschinenhaus abgetrennt.

Bei Flut wird die Bucht bei offenem Wehr gefüllt und beim höchsten Wasserstand geschlossen. Ist die Flut soweit zurückgegangen, dass eine maximale Fallhöhe vorhanden ist, wird der Beckeninhalt zur Stromerzeugung ausgenutzt.

Eine Vorrichtung der eingangs genannten Gattung kann auch in einem Flusslauf eingesetzt werden, um die Energie des strömenden Wassers auszunutzen. Der Einsatz in einem Flusslauf hat den Vorteil, dass eine konstante Strömung vorhanden ist, also keine Pausenzeiten zwischen Ebbe und Flut zu berücksichtigen sind.

Die US 4,818,888 betrifft eine Vorrichtung zur Erzeugung elektrischer Energie, die durch Wasserkraft angetrieben ist und zur Anordnung in Flüssen oder strömungsbehafteten Objekten eingesetzt werden kann. Das Wasserrad weist eine Vielzahl von Druckflächen auf, die schwenkbar um vertikal orientierte Achsen angeordnet sind. Die Druckflächen können hohl ausgebildet sein, um das Gewicht zu minimieren.

Die US 3,912,937 A betrifft ein unterwasserbetreibbares Wasserrad zur Erzeugung elektrischer Energie mit zwei Tragscheiben, die an einer horizontal orientierten Drehachse in einem Rahmen gelagert sind. Zwischen den Tragscheiben sind Druckflächen angeordnet, die pendelartig an Schwenkachsen angeordnet sind. Die Druckflächen sind über die Schwenkachse hinaus verlängert.

Der Erfindung liegt die Aufgabe zugrunde, eine Vorrichtung der eingangs genannten Gattung aufzuzeigen, die universell einsetzbar ist. Die Vorrichtung soll darüber hinaus einen eigenen Auftrieb aufweisen, insgesamt leicht ausgebildet sein.

Diese Aufgabe wird erfindungsgemäß durch eine Vorrichtung mit den Merkmalen des Hauptanspruches gelöst, mit mehreren, um eine gemeinsame Rotorachse kreisenden Druckflächen, die um parallel und mit Abstand zur Rotorachse angeordneten Achsen schwenkbar sind, insbesondere zur Energiegewinnung aus Gezeitenströmungen des Meeres, wobei die Druckflächen pendelartig an den Schenkelachsen befestigt und in den Radialebenen zwischen den Schwenkachsen und der Rotorachse Anschlagelemente für die Druckflächen angeordnet sind und die Schwenkachsen der Druckflächen mit ihren Enden an zur Rotorachse radial gerichteten Tragscheiben befestigt sind, welche sich an den Enden der Rotorachse befinden, wobei die Druckflächen über die Schwenkachse hinaus verlängert sind und die Vergrößerung so ausgebildet ist, dass die Drehung der Druckflächen nicht behindert ist, wobei asymmetrisch über den Rotationskreis verteilt und als Anfahrhilfe dienende Zusatzflächen an den Tragscheiben befestigt sind.

Erfindungsgemäß wird nun vorschlagen, statt der Tragarme Tragscheiben einzusetzen, die wenigstens doppelwandig ausgebildet sind. Die Tragscheiben weisen eine hohe Festigkeit auf. Die Doppelwandigkeit der Scheiben kann beispielsweise durch Einschluss eines. Gases, z. B. Luft, dazu ausgenutzt werden, die Scheiben leichter auszubilden. Sind die Scheiben aus Metall ausgebildet und sind Hohlräume der Scheiben gegenüber der Umgebung nicht abgeschlossen, kann in die Innenräume der Scheiben auch Wasser eindringen. Wird an die Scheiben ein Strom angelegt, sind in der Scheibe Elektrolyse-Prozesse auslösbar, durch welche in der Scheibe Sauerstoff erzeugt werden kann. Auch dadurch würde die Leichtigkeit der Scheibe erhöht. Das Erzeugen von Sauerstoff kann auch zu einem Aufschwimmen der Anlage zu Wartungszwecken genutzt werden.

Die Ausbildung der Halteelemente für die Druckflächen als Scheibe verbessert auch das Strömungsverhalten der Halteelemente, da eine Scheibe dem Wasser weniger Widerstand entgegensetzt als voneinander separate Tragarme. Durch die größere mechanische Stabilität sind Scheibendurchmesser von beispielsweise 10m realisierbar, zudem sind die Halteelemente einfacher herstellbar. Zwischen zwei Scheiben der Vorrichtung ist zudem die Wasserströmung kanalisierbar.

An eine Tragscheibe können von zwei Seiten Druckflächen angesetzt sein. Auf diese Weise ist eine Vorrichtung der eingangs genannten Gattung ausbildbar, welche mehrere Tragscheiben auf z. B. einer Achse mit einer Vielzahl von Druckflächen aufweist. Die Druckflächen sind dann jeweils in Gruppen angeordnet, wobei sich jede Gruppe zwischen zwei einander benachbarten Tragscheiben befindet.

Nach einer Weiterbildung der Erfindung ist vorgesehen, dass jede Druckfläche wenigstens doppelwandig ausgebildet ist.

Auch durch die doppelwandige Ausbildung eines z. B. aus Metall ausgebildeten Flächenelementes sind im Flächenelement durch Elektrolyse-Prozesse Sauerstoff erzeugbar. Der entstehende Sauerstoff kann für einen Auftrieb sorgen, wodurch das Flächenelement in seiner Schwenkposition an der Schwenkachse nicht stark durchhängt. Die Leichtigkeit des Flächenelementes wird erhöht, so dass durch die Strömung ausgelösten Schwenkbewegungen leichter erfolgen.

Eine Kombination der erfindungswesentlichen Merkmale doppelwandiges Flächenelement und doppelwandige Scheiben als Trageinrichtungen für die Flächenelemente ist möglich.

Nach einer nächsten Weiterbildung der Erfindung ist vorgesehen, dass in den Ebenen der Druckflächen auf den den Druckflächen abgekehrten Seiten bezüglich der Schwenkachsen zusätzliche Druckflächen angeordnet sind. Die Druckfläche ist somit über die Schwenkachse hinaus verlängert. Diese zusätzliche Druckfläche vergrößert die Anströmfläche, so dass der Widerstand der Druckflächen gegenüber der Wasserströmung erhöht ist. Die Drehung der Druckflächen wird durch ihre Vergrößerung jedoch nicht behindert.

Die erfindungsgemäßen Vorrichtungen können als Antriebsmaschinen für einen elektrischen Generator sowohl mit einer vertikal ausgerichteten, als auch horizontalen Rotorachse auf ein gegebenenfalls vorbereitetes Fundament am Meeresboden oder an einem Flussboden angelenkt werden. Dabei kommt es auf eine genaue Ausrichtung, ob horizontal oder vertikal nicht an. Die Erfindungsgegenstände können in zahlreichen Einheiten, weitgehend angepasst an die Topographie des Meeres- bzw. Flussbodens installiert werden. Durch die verhältnismäßig kurze Stillstandsperiode mit Strömungsumkehr zwischen ablaufendem und auflaufendem Wasser in den Gezeitenbereichen oder durch keine Stillstandsperioden bei Anordnung in einem Flussbett, kann eine wirtschaftliche Gesamtnutzung durch einen Verbund vieler an unterschiedlichen geographischen Orten installierter Vorrichtungen erreicht werden.

Nicht nur mit wenigen größeren Einheiten, sondern auch mit einer Vielzahl kleiner Einheiten lässt sich eine wirtschaftliche Nutzung erreichen. Voraussetzungen sind eine weitgehende äußerst preiswerte Herstellung in Folge einfachster Konstruktionen und Wartungsfreiheit.

Die Erfindungsgegenstände zeigen eine zur Rotorachse völlig symmetrische Konstruktion, so dass Vorkehrungen zu Verbesserung des Anfahrverhaltens bei der Umkehr der Strömungsrichtung eines Gezeitenwassers vorteilhaft sind. Diese Vorkehrungen sollten im Rahmen der Gesamtkonstruktion von größter technischer Einfachheit sein, was durch die Möglichkeit, den Unterwassergenerator zur Erzeugung eines auf den Rotor wirkenden Anfahrmoments in den Motorbetrieb umzusteuern gegeben ist. Die Drehrichtung des Generators kann beliebig. Alternativ sind als Anfahrhilfen Zusatzflächen einsetzbar. Sie können asymmetrisch über den Rotationskreis verteilt an den Außenseiten der Tragscheiben befestigt sein.

Die erfindungsgemäßen Vorrichtungen weisen nach einer Weiterbildung ein Traggestell auf, das den Rotor trägt. Dieses Traggestell kann an einem Fundament auf den Gewässerboden befestigt sein, möglich ist aber auch das Traggestell mit anderen Befestigungsmitteln am Aufstellort festzulegen. Es kann z. B. zwischen Befestigungspunkten eingesetzt werden. Befestigungsmittel können Seile umfassen.

Mit Hilfe dieser Seile ist somit eine einfache und schnelle Befestigung der Vorrichtung z. B. in einem Flussbett oder Fjord ermöglicht. Es ist kein Fundament zu bauen, größere Baumaßnahmen oder Abbaumaßnahmen bei Stilllegung sind nicht erforderlich. Die Vorrichtung kann auf eine Fläche aufgestellt werden, auf der sie möglichst sicheren Stand hat. Dieser Stand kann dann durch die Seile fixiert. Werden durch das Anordnen der Vorrichtung direkt auf einer Fläche im Flussbett oder im Meeresbett erfolgt keine Erhöhung ihrer Anordnung, so können auch geringe Wasserstände ausgenutzt werden.

Durch die Möglichkeit, die Anlage durch Verspannung zu befestigen, kann sie auch in besonders tiefen Gewässern, z. B. in Fjorden errichtet werden. Sie kann z. B. zwischen Fjordwänden frei hängend angeordnet sein.

Ausführungsbeispiele der Erfindung, aus denen sich weitere erfinderische Merkmale ergeben, sind in der Zeichnung dargestellt. Es zeigen:
Fig. 1: eine Seitenansicht einer erfindungsgemäßen Vorrichtung zur Nutzbarmachung der kinetischen Energie strömenden Wassers,

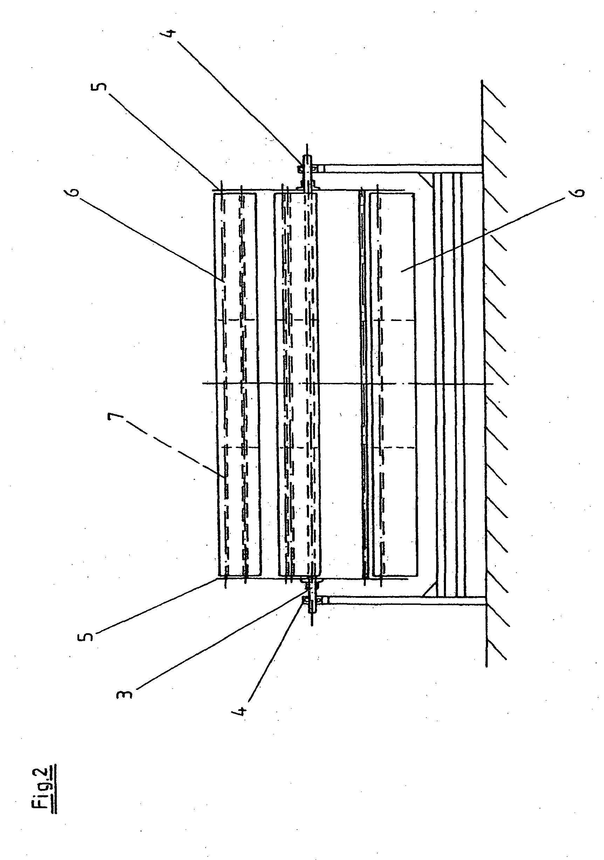

Fig. 2 : weitere Seitenansicht der Vorrichtung gemäß Fig. 1 und
Fig. 3 : maßstäblich vergrößerte Ansicht der Einzelheit III in Fig. 1.

Die erfindungsgemäße Vorrichtung weist ein Gestell 1 auf, mit dem sie auf einen Boden 2 aufstellbar ist oder zwischen zwei Befestigungspunkten verspannbar ist.

Bei dem Boden 2 kann es sich beispielsweise um einen Meeresboden oder um ein Flussbett handeln. Das Gestell 1 ist aus mehreren miteinander verbundenen Profilen ausgebildet. Es trägt eine Rotorachse 3, welche in Lagern 4 aufgenommen ist. An der Rotorachse 3 sind zwei Tragscheiben 5 drehfest befestigt. Beide Tragscheiben 5 sind zueinander parallel ausgerichtet und in einem Abstand zueinander angeordnet.

Die Tragscheiben 5 tragen Druckflächen 6. Die Druckflächen 6 sind über Schwenkachsen 7 zwischen den Tragscheiben 5 angeordnet, wobei die Schwenkachsen 7 senkrecht zu den flächigen Erstreckungen der Tragscheiben 5 ausgerichtet sind.

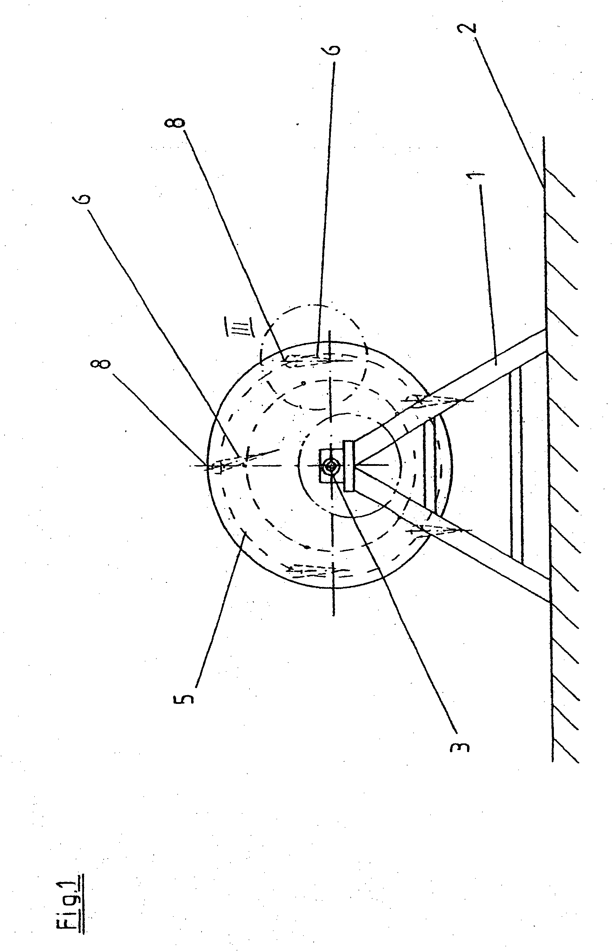

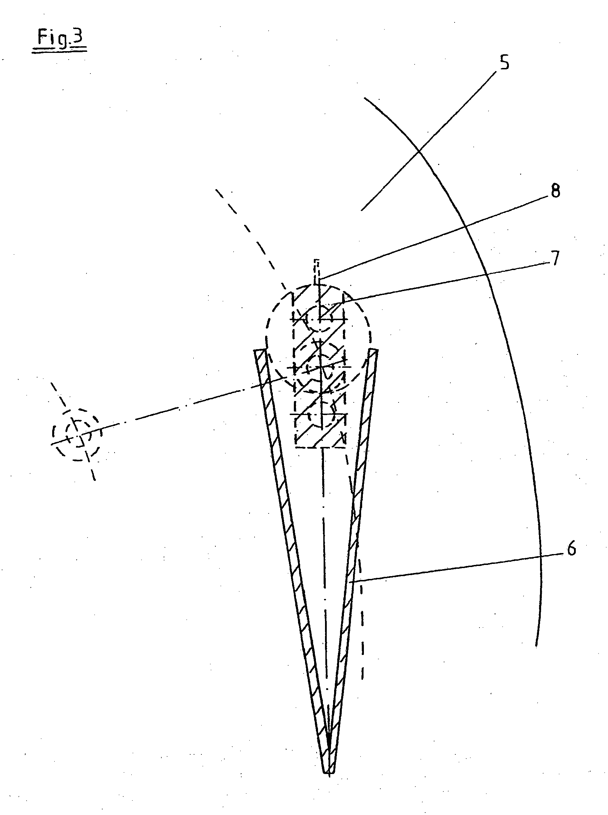

Fig. 3 zeigt, dass jede Druckfläche 6 eine im Abstand zur Schwenkachse 7 spitz zulaufende Ausbildung hat. Fig. 1 zeigt, dass in den Ebenen der Druckflächen 6 auf den den Druckflächen 6 abgekehrten Seiten bezüglich der Schwenkachsen zusätzliche

Druckflächen 8 angeordnet sind. Fig. 3 zeigt, dass die Druckflächen 6 hohl ausgebildet sind.

Auch die Tragscheiben 5 sind hohl ausgebildet.

An dem Gestell 1 können Seile angeschlagen werden, um die Vorrichtung z. B. in einem Flussbett oder in einem Fjord fixieren zu können.

## Patentansprüche

1. Vorrichtung zur Nutzbarmachung kinetischer Energie strömenden Wassers mit mehreren, um eine gemeinsame Rotorachse (3) kreisenden Druckflächen (6), die um parallel und mit Abstand zur Rotorachse (3) angeordneten Achsen schwenkbar sind, insbesondere zur Energiegewinnung aus Gezeitenströmungen des Meeres, wobei die Druckflächen (6) pendelartig an den Schwenkachsen (7) befestigt und in den Radialebenen zwischen den Schwenkachsen (7) und der Rotorachse (3) Anschlagelemente für die Druckflächen (6) angeordnet sind und die Schwenkachsen (7) der Druckflächen (6) mit ihren Enden an zur Rotorachse (3) radial gerichteten, wenigstens doppelwandig ausgebildeten Tragscheiben (5) befestigt sind, welche sich an den Enden der Rotorachse (3) befinden, **dadurch gekennzeichnet, dass** asymmetrisch über den Rotationskreis verteilte, quer zur Strömungsrichtung gestellte und als Anfahrhilfe dienende Zusatzflächen an den Tragscheiben (5) befestigt sind.

2. Vorrichtung nach Anspruch 1, **dadurch gekennzeichnet, dass** jede Druckfläche (6) wenigstens doppelwandig ausgebildet ist.

3. Vorrichtung nach Anspruch 1 oder 2, **dadurch gekennzeichnet, dass** in den Ebenen der Druckflächen (6) auf den den Druckflächen (6) abgekehrten Seiten bezüglich der Schwenkachsen (7) zusätzliche Druckflächen (8) angeordnet sind.

4. Vorrichtung nach Anspruch 3, **dadurch gekennzeichnet, dass** die zusätzlichen Druckflächen (8) so ausgebildet sind, dass die Drehung der Druckflächen (6) nicht behindert ist.

5. Vorrichtung nach einem der vorhergehenden Ansprüche, **dadurch gekennzeichnet, dass** die Rotorachse (3) horizontal ausgerichtet ist.

6. Vorrichtung nach einem der vorhergehenden Ansprüche, **dadurch gekennzeichnet, dass** die Rotorachse (3) als Läuferwelle eines elektrischen Unterwassergenerators ausgebildet ist.

7. Vorrichtung nach einem der vorhergehenden Ansprüche, **dadurch gekennzeichnet, dass** die radialen Tragscheiben (5) widerstandsarme Strömungsprofile aufweisen.

8. Vorrichtung nach einem der Ansprüche 1 bis 7, **dadurch gekennzeichnet, dass** die Tragscheiben (5) an den Stirnseiten des Unterwassergenerators angeordnet sind.

9. Vorrichtung nach einem der vorhergehenden Ansprüche, **dadurch gekennzeichnet, dass** sie ein Traggestell (1) aufweist, das den Rotor trägt.

10. Vorrichtung nach Anspruch 9, **dadurch gekennzeichnet, dass** das Traggestell (1) mit Befestigungsmitteln am Aufstellort befestigt ist.

11. Vorrichtung nach Anspruch 10, **dadurch gekennzeichnet, dass** die Befestigungsmittel Seile umfassen.

12. Vorrichtung nach einem der Ansprüche 1 bis 11, **dadurch gekennzeichnet dass** der Unterwassergenerator zur Erzeugung eines auf den Rotor wirkenden Anfahrdrehmomentes kurzzeitig in den Motorbetrieb umsteuerbar ist.

## Claims

1. Device for utilizing the kinetic energy of flowing water with several pressure surfaces (6) rotating around a common rotor axis (3), which pressure surfaces (6) can be pivoted around axes arranged parallel to and spaced from the rotor axis (3), in particular for the production of energy from tidal currents of the sea, whereby the pressure surfaces (6) are attached to the pivot axes (7) in a pendulum-like manner and stop elements for the pressure surfaces (6) are arranged in the radial planes between the pivot axes (7) and the rotor axis (3), wherein the pivot axes (7) of the pressure surfaces (6) are attached by their ends to support discs (5) radially directed towards the rotor axis (3), which support discs are located at the ends of the rotor axis (3), and that the support discs (5) are embodied in at least a double-walled manner, **characterized in that** additional surfaces are arranged at the support discs (5), the additional surfaces being distributed asymmetrically over the rotational circle and positioned crosswise to the direction of flow on the support discs (5) and serving as starting aid.

2. Device according to claim 1, **characterized in that** each pressure surface (6) is embodied at least in a double-walled manner.

3. Device according to claim 1 or 2, **characterized in that** additional pressure surfaces (8) are arranged in the planes of the pressure surfaces (6) on the sides facing away from the pressure surfaces (6) with respect to the pivot axes (7).

4. Device according to claim 3, **characterized in that** the additional pressure surfaces (8) are arranged such that a rotation of the pressure surfaces (6) are not obstructed.

5. Device according to one of the preceding claims, **characterized in that** the rotor axis (3) is aligned horizontally.

6. Device according to one of the preceding claims, **characterized in that** the rotor axis (3) is embodied as the armature shaft of an electric underwater generator.

7. Device according to one of the preceding claims, **characterized in that** the radial support discs (5) have low-resistance flow profiles.

8. Device according to one of claims 1 through 7, **characterized in that** the support discs (5) are arranged on the front faces of the underwater generator.

9. Device according to one of the preceding claims, **characterized in that** it has a support frame (1) that carries the rotor.

10. Device according to claim 9, **characterized in that** the support frame (1) is attached at the site with attachment means.

11. Device according to claim 10, **characterized in that** the attachment means include ropes.

12. Device according to one of claims 1 through 11, **characterized in that** the underwater generator can be temporarily reversed to engine operation to produce a starting torque acting on the rotor.

## Revendications

1. Dispositif pour exploiter l'énergie cinétique de l'eau en écoulement comprenant plusieurs surfaces à pression (6) en orbite autour d'un axe de rotor commun (3), qui sont capables de pivoter autour d'axes agencés à distance de l'axe de rotor (3), en particulier pour la récupération d'énergie des écoulements provoqués par les marées de la mer, dans lequel les surfaces à pression (6) sont fixées à la manière de pendules aux axes de pivotement (7) et des éléments de butée pour les surfaces à pression (6) sont agencés dans les plans radiaux entre les axes de pivotement (7) et l'axe de rotor (3), et les axes de pivotement (7) des surfaces à pression (6) sont fixés avec leurs extrémités sur des plaques porteuses (5) orientées radialement vers l'axe de rotor (3) et réalisées au moins à double paroi, plaques porteuses qui se trouvent aux extrémités de l'axe de rotor (3), **caractérisé en ce que** des surfaces additionnelles, réparties de façon asymétrique sur le cercle de rotation, dressées transversalement à la direction d'écoulement et servant d'auxiliaires de démarrage, sont fixées sur les plaques porteuses (5).

2. Dispositif selon la revendication 1, **caractérisé en ce que** chaque surface à pression (6) est réalisée au moins à double paroi.

3. Dispositif selon la revendication 1 ou 2, **caractérisé en ce que** des surfaces à pression (8) additionnelles sont agencées dans les plans des surfaces à pression (6) sur les côtés détournés des surfaces à pression (6) par rapport aux axes de pivotement (7).

4. Dispositif selon la revendication 3, **caractérisé en ce que** les surfaces à pression additionnelles (8) sont ainsi réalisées que la rotation des surfaces à pression (6) n'est pas entravée.

5. Dispositif selon l'une des revendications précédentes, **caractérisé en ce que** l'axe de rotor (3) est orienté horizontalement.

6. Dispositif selon l'une des revendications précédentes, **caractérisé en ce que** l'axe de rotor (3) est réalisé sous forme d'arbre de rotor d'un générateur électrique immergé.

7. Dispositif selon l'une des revendications précédentes, **caractérisé en ce que** les plaques porteuses radiales (5) présentent des profils d'écoulement à faible résistance.

8. Dispositif selon l'une des revendications 1 à 7, **caractérisé en ce que** les plaques porteuses (5) sont agencées sur les faces frontales du générateur immergé.

9. Dispositif selon l'une des revendications précédentes, **caractérisé en ce qu'**il comprend un châssis porteur (1) qui porte le rotor.

10. Dispositif selon la revendication 9, **caractérisé en ce que** le châssis porteur (1) est fixé à l'emplacement d'érection avec des moyens de fixation.

11. Dispositif selon la revendication 10, **caractérisé en ce que** les moyens de fixation incluent des câbles.

12. Dispositif selon l'une des revendications 1 à 11, **caractérisé en ce que** le générateur immergé est susceptible d'être brièvement inversé en fonctionnement moteur afin d'engendrer un couple de rotation de démarrage agissant sur le rotor.
